(19) Europäisches Patentamt
European Patent Office
Office européen des brevets

(11) EP 3 193 143 A1

(12) EUROPEAN PATENT APPLICATION

(43) Date of publication:
19.07.2017 Bulletin 2017/29

(51) Int Cl.:
G01F 23/26 (2006.01)    G01F 25/00 (2006.01)

(21) Application number: 17150832.8

(22) Date of filing: 10.01.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 12.01.2016 GB 201600561

(71) Applicant: Linde Aktiengesellschaft
80331 München (DE)

(72) Inventor: BAYERL, Wilhelm
82054 Sauerlach (DE)

(74) Representative: Christie, Gemma Louise
Linde Aktiengesellschaft
Intellectual Property
10 Priestley Road
The Surrey Research Park
Guildford, Surrey GU2 7XY (GB)

(54) A CYLINDER FOR PRESSURISED LIQUEFIED GAS AND A METHOD OF CALCULATING THE LIQUID VOLUME

(57) A method of calculating the liquid level in a transportable pressurised gas supply cylinder, the method comprising measuring a first capacitance of the cylinder when empty or filled with a first known quantity of pressurised liquefied gas; measuring a second capacitance of the cylinder when filled with a different known quantity of the pressurised liquefied gas; measuring a third capacitance of the cylinder when in an unknown partially filled state; measuring the temperature and pressure in the cylinder; and comparing the third capacitance to the first and second capacitances and taking into account the temperature and pressure to determine the liquid level in the cylinder in the partially filled state.

Capacity between diptube and shelf

Printed by Jouve, 75001 PARIS (FR)

**Description**

The present invention relates to a cylinder for pressurised liquefied gas and a method of calculating the liquid volume in such a cylinder.

The only known method of measuring the content of a high pressure mobile gas vessel filled with pressurised liquefied gas is to weigh the cylinder and to subtract from this measurement the empty weight of the cylinder (known as the Tare weight). From this measurement the weight of the liquefied gas and hence the liquid content can be determined. Mechanical devices (floater principle) are known for low pressure LPG cylinders, but this principle is not feasible for higher pressures. Using thermocromatic sensors on the outside of the cylinder to detect the liquid level is only possible during the release of gas. If the gas release is stopped the indication will disappear as the temperature rises. Level detection of cylinder in the gas storage is not possible.

It is not possible to measure the remaining content by measuring the pressure as can be done for a permanent gas because the head pressure is more of less constant until the last droplet of liquid phase has vaporised. Once that happens, the pressure quickly drops as gas is released from the cylinder.

Weighing the cylinder is not particularly useful in many cases, particularly where the cylinder is connected up to piping. Disconnecting the cylinder from the piping is time-consuming and causes gas losses. On the other hand, weighing the cylinder whilst it is connected will skew the results as the pressure and tension in the connected pipes and the cylinder fixation will affect the measured weight.

The present invention aims to provide a method and apparatus for determining the liquid level in a cylinder which does not suffer from these problems.

According to a first aspect of the present invention there is provided a method of calculating the liquid level in a transportable pressurised gas supply cylinder, the method comprising measuring a first capacitance of the cylinder when empty or filled with a first known quantity of pressurised liquefied gas; measuring a second capacitance of the cylinder when filled with a different known quantity of pressurised liquefied gas; measuring a third capacitance of the cylinder when in an unknown partially filled state; measuring the temperature and pressure in the cylinder comparing the third capacitance to the first and second capacitances and taking into account the temperature and pressure to determine the liquid level in the cylinder in the partially filled state.

The invention relies on the fact that the dielectric constant of the liquid phase is significantly higher than that of the gaseous phase. Therefore, the changing level of liquid within the cylinder produces a corresponding change of capacitance.

The first capacitance is preferably measured when the cylinder is empty. The method would also work if this were measured with a small amount of liquid in the cylinder, but this is unnecessary. The second capacitance can then be measured once the cylinder has been filled with a known quantity of pressurised liquefied gas. Ideally this is the amount of pressurised liquefied gas necessary to fill the cylinder, typically approx.. 95%.

The two capacitance measurements provide an indication of the capacitance for a cylinder which is empty and/or full (although this can also be done by using nearly empty and nearly full levels) which effectively calibrates the cylinder.

By measuring the third capacitance for an unknown quantity of the liquid, it is possible to determine how far between the two other values the fill level is thereby allowing the fill level to be determined.

Measuring the pressure within the cylinder improves the accuracy of the level results as the pressure affects the density of liquid and this measurement.

Similarly, measuring the temperature within the cylinder improves the accuracy of the level results as the temperature affects the density of the liquid.

The method also preferably comprises comparing the determined liquid level with known thresholds and providing an indication to a user should the liquid level fall outside certain parameters. This allows a user to be alerted, for example, as the contents of the cylinder are depleted.

The method may further comprise determining when a pre-determined temperature and pressure are exceeded and switching to a method of calculating the quantity of gas in the cylinder using the pressure and temperature measurements and without using the capacitance measurements.

Preferably the method further comprises transmitting the information about the liquid level wirelessly to a remote location. This allows an alert to be provided to a user at a control station or on a portable device such as a smart phone.

According to a second aspect of the present invention there is provided a transportable cylinder for pressurised liquefied gas supply, the cylinder comprising a first capacitive plate extending substantially for the full length of the cylinder, a second capacitive plate spaced from the first capacitive plate and extending for substantially the full length of the cylinder, and a sensor to measure the capacitance between the plates, temperature sensor to measure the temperature within the cylinder and a pressure sensor to measure the pressure within the cylinder.

Such a cylinder is able to measure the capacitance within the cylinder for any fill level within the cylinder given the axial extent of the two capacitive plates.

The two capacitive plates may be separate plates which extend along within the cylinder. However, preferably, one of the capacitive plates is the cylinder wall. Preferably, the second capacitive plate is a dip-tube required in the cylinder anyway to allow liquid disposal. as this simplifies construction

The cylinder is preferably provided with a control circuit to compare the measured capacitance with known threshold values and provide an indication of an abnormal filling condition.

Preferably the cylinder is provided with a wireless transmitter to allow information concerning the fill level to be transmitted to a remote location for consideration by a user.

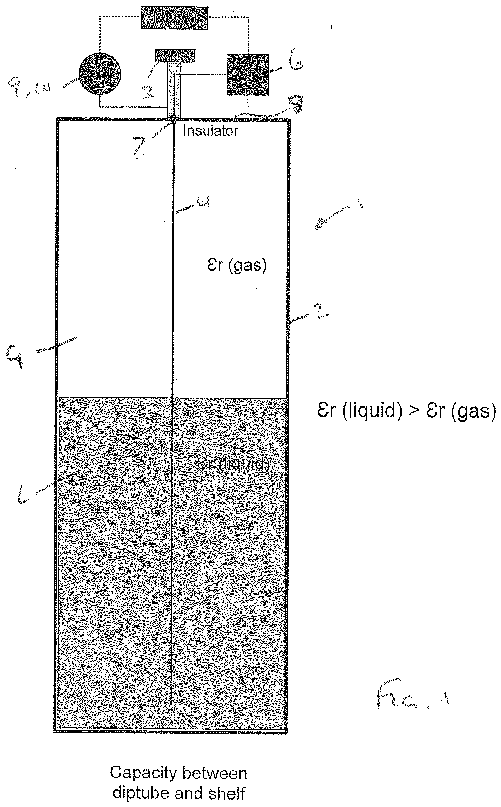

An example of a cylinder in accordance with the present invention will now be described with reference to the accompanying drawing which is a schematic cross-section through a cylinder.

The cylinder 1 has a wall 2 which is able to maintain the pressure of the pressurised liquefied gas to the required level. The pressurised liquefied gas comprises a gas component G and a liquid component L. The gas G maintains a constant pressure as it is withdrawn through an outlet valve 3 (shown only schematically in the figure as this is a conventional component) with or without a dip-tube because, as the gas or liquid escapes, some of the liquid L vaporises to maintain the pressure.

A capacitive plate 4 extends from the top of the cylinder most of the way down the cylinder terminating in a position immediately above the base of the cylinder. This can be the standard metal dip-tube. A second capacitive plate may be provided which is similar to the capacitive plate 4. However, in the disclosed example, the wall 2 provides the second plate of the capacitor. A capacitive sensor 6 is connected to a capacitive plate 4 via a connector 7 which is also connected to the wall 2 at a location adjacent to the cylinder. The region between the capacitive sensor 6 and the wall 2 and the connector 7 is an electrical insulator 8 to prevent short circuiting of the capacitor. The liquid has a dielectric constant $\varepsilon_r$ (liquid) which is significantly higher than the dielectric constant $\varepsilon_r$ (gas) of the gas in the cylinder. As a result of this, the capacitance measured by the sensor 6 varies as the liquid level in the cylinder 1 changes.

A first capacitance reading is taken before the cylinder is filled to provide a first reference reading. The cylinder is then filled with pressurised liquefied gas which will typically result in a liquid level which is approximately 90-95% of the height of the cylinder depending on pressure, temperature and gas type. A second capacitance reading is then taken to provide the capacitance of the full cylinder.

With the cylinder calibrated in this way, the sensor 6 can continue to take readings as the gas is depleted to allow the liquid level to be determined.

The capacitance of a cylindrical system is calculated in accordance with the equation below:

$$C = 2\pi\varepsilon_0\varepsilon_r\frac{l}{\ln\frac{R_2}{R_1}}$$

wherein C is the total capacitance, $\varepsilon_0$ is the electric constant, $\varepsilon_r$ is the relative dielectric constant, I is the length of the capacitor, $R_1$ is the outer radius of the capacitive plate/dip tube 4 and $R_2$ is the inner radius of the cylinder wall.

As the liquid level drops, the proportion of the fluid between the capacitor plates which is the gas increases. This has a significantly lower dielectric constant than the liquid. As a result of this, the capacitance C changes linearly with respect to liquid depth (assuming that the cylinder maintains a constant cross-section such that $R_1$ and $R_2$ do not change).

It will be appreciated that, if the capacitive plates do not have the circular configuration described above, a different calculation of capacitance C is made in accordance with well-known methods in the prior art.

Three examples of cylinders are set out below.

In each case, the example provides a volumetric capacity of the cylinder, the maximum content by weight and the type of gas. This is followed by an indication of all of the parameters required for the above equation. This is then followed by an indication of the correlation between the capacitance and the content of liquid measured as a percentage by weight of the total liquid capacity given above.

From this information, a look-up table can be provided such that the measured capacitance can be used to determine the remaining volume of liquid in the cylinder.

### Example A:

| | | |
|---|---|---|
| **13,4 Ltr/10kg** | I(full)= | 0.700 m |
| **CO$_2$** | R(2) = | 0.100 m |
| | R(1) = | 0.004 m |
| | $\varepsilon 0$ = | 8.854 pF/m |
| CO$_2$ (gasous) | $\varepsilon r$ = | 1.010 | 20°C,10bar |

(continued)

**Example A:**

| | | | CO$_2$ (liquid) | $\varepsilon r =$ | 1.604 | 0°C, 50bar |

| Content [%] | C [pF] |
|---|---|
| 100 | 19.405 |
| 90 | 18.686 |
| 80 | 17.967 |
| 70 | 17.247 |
| 60 | 16.528 |
| 50 | 15.809 |
| 40 | 15.090 |
| 30 | 14.371 |
| 20 | 13.651 |
| 10 | 12.932 |
| 0 | 12.213 |

**Example B:**

| **50 Ltr/37,5kg** | I(full)= | 1.450 m | |
|---|---|---|---|
| **CO$_2$** | R(2) = | 0.110 m | |
| | R(1) = | 0.004 m | |
| | $\varepsilon 0 =$ | 8.854 pF/m | |
| CO$_2$ (gasous) | $\varepsilon r =$ | 1.010 | 20°C,10bar |
| CO$_2$ (liquid) | $\varepsilon r =$ | 1.604 | 0°C, 50bar |

| Content [%] | C [pF] |
|---|---|
| 100 | 39.040 |
| 90 | 37.593 |
| 80 | 36.146 |
| 70 | 34.700 |
| 60 | 33.253 |
| 50 | 31.806 |
| 40 | 30.359 |
| 30 | 28.912 |
| 20 | 27.465 |
| 10 | 26.018 |
| 0 | 24.571 |

**Example C:**

| **79 Ltr/33kg** | I(full)= | 1.150 m |
|---|---|---|
| **LPG** | R(2) = | 0.155 m |
| | R(1) = | 0.004 m |
| | $\varepsilon 0 =$ | 8.854 pF/m |
| LPG (gasous) | $\varepsilon r =$ | 1.000 |
| LPG (liquid) | $\varepsilon r =$ | 1.200 |

| Content [%] | C [pF] |
|---|---|
| 100 | 20.118 |
| 90 | 19.855 |
| 80 | 19.593 |
| 70 | 19.330 |
| 60 | 19.068 |
| 50 | 18.806 |
| 40 | 18.543 |

(continued)

**Example C:**

| 30 | 18.281 |
|---|---|
| 20 | 18.018 |
| 10 | 17.756 |
| 0 | 17.494 |

The cylinder is provided with pressure and temperature sensors 9, 10. As the temperature and pressure have an impact on the density of the liquid this input can reduce the uncertainty of the level results.

The cylinder is preferably provided with a wireless transmitter to allow information concerning the fill levels to be transmitted to a remote location, for example, to a control station or a smart phone to provide information to a user on the fill level in the cylinder as well as alerting them, for example, when the cylinder becomes depleted.

In some cases the temperature may exceed the critical point of the gas. At this point, the two phases (liquid and gaseous) no longer exist as all of the liquid has vaporised. At this level, the capacitive detection is no longer able to provide an indication of the pressure level. However, the pressure and temperature sensor are able to provide an indication of the quantity of gas within the cylinder. For example, in the case of $CO_2$ once the temperature rises above 31°C, all of the gas will have vaporised. In this case, a control system can be programmed such that, once the temperature exceeds this threshold value, instead of calculating the liquid level based on the capacitance as set out above, the controller switches to a method of measuring the volume of gas based on the pressure and temperature sensors.

## Claims

1.  A method of calculating the liquid level in a transportable pressurised gas supply cylinder, the method comprising measuring a first capacitance of the cylinder when empty or filled with a first known quantity of pressurised liquefied gas; measuring a second capacitance of the cylinder when filled with a different known quantity of the pressurised liquefied gas; measuring a third capacitance of the cylinder when in an unknown partially filled state; measuring the temperature and pressure in the cylinder; and comparing the third capacitance to the first and second capacitances and taking into account the temperature and pressure to determine the liquid level in the cylinder in the partially filled state.

2.  A method according to claim 1, further comprising comparing the determined liquid level with known thresholds and providing an indication to a user should the liquid level fall outside certain parameters.

3.  A method according to claim 1 or claim 2, further comprising transmitting the information about the liquid level wirelessly to a remote location.

4.  A method according to any one of the preceding claims, further comprising determining when a pre-determined temperature and pressure are exceeded and switching to a method of calculating the quantity of gas in the cylinder using the pressure and temperature measurements and without using the capacitance measurements.

5.  A transportable cylinder for pressurised liquefied gas supply, the cylinder comprising a first capacitive plate extending substantially for the full length of the cylinder and a second capacitive plate spaced from the first capacitive plate and extending for substantially the full length of the cylinder, and a sensor to measure the capacitance between the plates, a temperature sensor to measure the temperature within the cylinder and a pressure sensor to measure the pressure within the cylinder.

6.  A cylinder according to claim 5, wherein one of the capacitive plates is provided by the wall of the cylinder.

7.  A cylinder according to claim 5 or claim 6, wherein one of the capacitive plates is provided by a dip-tube.

8.  A cylinder according to any of claims 5 to 7, provided with a control circuit to compare the measured capacitance with known threshold values and provide an indication of an abnormal liquid level.

9.  A cylinder according to any of claims 5 to 8, wherein the cylinder is provided with a wireless transmitter to allow information concerning the fill level to be transmitted to a remote location for consideration by a user.

Capacity between
diptube and shelf

Europäisches
Patentamt

European
Patent Office

Office européen
des brevets

# EUROPEAN SEARCH REPORT

Application Number

EP 17 15 0832

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/044381 A1 (WESTPORT POWER INC [CA]; HARPER GREGORY C [CA]; BATENBURG GREGORY A [C] 4 April 2013 (2013-04-04) * columns 7,8; claim 10; figure 1 * | 1-9 | INV. G01F23/26 ADD. G01F25/00 |
| Y | WO 96/29580 A1 (FIGGIE INT INC [US]) 26 September 1996 (1996-09-26) * pages 12,14,19 * | 1-9 | |
| Y | US 2009/139325 A1 (CUNNINGHAM J VERN [CA] ET AL) 4 June 2009 (2009-06-04) * claims 15,21 * | 3,9 | |
| Y | US 3 668 882 A (SARSTEN JAN A ET AL) 13 June 1972 (1972-06-13) * claim 1 * | 4 | |
| Y | DE 37 31 793 A1 (TOTAL FEUERSCHUTZ GMBH [DE]) 30 March 1989 (1989-03-30) * figure 1 * | 7 | |

TECHNICAL FIELDS SEARCHED (IPC)

G01F

The present search report has been drawn up for all claims

| Place of search | Date of completion of the search | Examiner |
|---|---|---|
| The Hague | 23 May 2017 | Reeb, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 17 15 0832

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2017

| Patent document cited in search report | | Publication date | Patent family member(s) | | Publication date |
|---|---|---|---|---|---|
| WO 2013044381 | A1 | 04-04-2013 | CA | 2753588 A1 | 27-03-2013 |
| | | | CN | 103998904 A | 20-08-2014 |
| | | | EP | 2761260 A1 | 06-08-2014 |
| | | | US | 2014223992 A1 | 14-08-2014 |
| | | | WO | 2013044381 A1 | 04-04-2013 |
| WO 9629580 | A1 | 26-09-1996 | AU | 5316696 A | 08-10-1996 |
| | | | DE | 69617218 D1 | 03-01-2002 |
| | | | DE | 69617218 T2 | 21-11-2002 |
| | | | EP | 0815419 A1 | 07-01-1998 |
| | | | US | 5726908 A | 10-03-1998 |
| | | | WO | 9629580 A1 | 26-09-1996 |
| US 2009139325 | A1 | 04-06-2009 | CA | 2700469 A1 | 16-04-2009 |
| | | | US | 2009139325 A1 | 04-06-2009 |
| | | | WO | 2009046545 A1 | 16-04-2009 |
| US 3668882 | A | 13-06-1972 | NONE | | |
| DE 3731793 | A1 | 30-03-1989 | NONE | | |

EPO FORM P0459

For more details about this annex : see Official Journal of the European Patent Office, No. 12/82